# EUROPEAN PATENT SPECIFICATION

(11) **EP 2 870 413 B1**
(45) Date of publication and mention of the grant of the patent: **04.09.2019**
(21) Application number: 13739854.1
(22) Date of filing: 04.07.2013
(51) Int. Cl.: F24C 15/20, B01D 46/00, B01D 53/32, B01D 53/66, B03C 3/017, B03C 3/68, B03C 3/15, B03C 3/47, B03C 3/36, B03C 3/60, F24F 3/16

(54) **FILTER SYSTEM, EXTRACTOR HOOD AND KITCHEN PROVIDED THEREWITH, AND METHOD FOR EXTRACTING AIR**
FILTERSYSTEM, DUNSTABZUGSHAUBE UND KÜCHE DAMIT SOWIE VERFAHREN ZUR LUFTABSAUGUNG
SYSTÈME DE FILTRE, HOTTE À ÉVACUATION ET CUISINE POURVUE DE CEUX-CI, ET PROCÉDÉ D'EXTRACTION D'AIR

(30) Priority: 06.07.2012 NL 2009138
(43) Date of publication of application: 13.05.2015
(73) Proprietor: PlasmaMade B.V., 7951 SK Staphorst (NL)
(72) Inventor: VAN DER SLUIS, Kenny Robbert, NL-7951 HK Staphorst (NL)
(74) Representative: Verdijck, Gerardus
(86) International application number: PCT/NL2013/050494
(87) International publication number: WO 2014/007626

(56) References cited:
- EP-A1- 2 433 712
- EP-A2- 2 444 159
- WO-A1-2006/095199
- WO-A1-2010/008110
- CN-Y- 2 586 082
- DE-A1- 2 621 172
- DE-A1-102006 003 028
- DE-A1-102006 032 477
- FR-A- 1 073 149
- US-A- 3 989 486
- US-A- 4 244 710
- US-A- 4 549 887
- US-A1- 2005 224 069
- US-A1- 2010 275 900

## Description

The present invention relates to a filter system. Such filter systems are for instance used in kitchens, more particularly in extractor hoods for extracting cooking odours, and for instance in WTW systems, hospitals, production environments and so on.

Known extraction systems make use of a fan to draw in air through a suction opening. The air is then carried through a filter and subsequently discharged. Such a filter is usually a fixed grid and/or filter mat. The indrawn air is either discharged to the outside or recirculated. Said filters are examples of passive filters. Alternatively or additionally, it is also known to use active filters, wherein an electric field is for instance generated.

EP 2 444 159 A2 discloses a filter module for filtering air using an alternating electrical field.

A problem occurring in the use of active filters in an extraction system is that they require a separate control from the control of the extraction system. This makes conversion, standardization and other operations complex and relatively expensive.

The present invention has for its object to wholly or at least partially resolve problems with existing extraction systems and filter systems in particular.

The present invention provides for this purpose a filter system according to claim 1.

By providing a sensor, particularly an airflow sensor, a flow of indrawn air is detected when the fan is activated from the filter system. Using the control means this detection signal is used to switch the electric filter. Following activation such an electric filter preferably realizes a direct voltage of for instance 5 kV which is transmitted to a screen. A type of potential filter is hereby realized with which an electrostatic field is created. Small particles such as smoke particles, fungi, odour particles and so on can be captured by means of such a filter and thereby removed from the indrawn air. The air discharged to the outside ("Abluft") is hereby delivered in clean state to the surrounding area. The filter system according to the invention is preferably used in a recirculation system ("Umluft") wherein the indrawn air is recirculated in for instance the kitchen. The requirements for the removal of contaminants in any form in the indrawn air are therefore even higher here.

In addition to the electric filter use can also be made of a grid and/or active carbon filter or other filters. According to the invention, the filter system includes a plasma filter.

An autonomous system is obtained by switching the electric filter using the sensor. The filter does not therefore operate together with the extractor hood or extraction system in which it is arranged. Such an autonomous system provides the advantage that it operates independently of the extractor hood in which a filter system according to the invention can be arranged. The filter system can therefore be provided in modular manner and for instance also be built into existing extractor hoods. Embodying the control of the filter on the basis of a sensor signal when an airflow is detected, this indicating that the fan, and thereby the filter system, are in operation, achieves that a user, for instance a chef, need not perform any manual operation. An alternative with motion sensors for switching on an extractor hood is not required either. Application of the sensor according to the invention provides an optimal guarantee of the operation of the filter in combination with actual extraction. The range of the sensor is adapted to the size of the airflows occurring in the filter system.

Such a filter system according to the invention is preferably applied in extractor hoods in kitchens wherein airflow is extracted at a flow rate of about 1-1500 m³/hour. A plurality of extraction systems according to the invention can otherwise be employed within the same kitchen, and even within one extractor hood. It is also possible according to the invention to apply the filter in other extraction systems, for instance in so-called WTW systems.

The filter system according to the invention can be applied at diverse locations. In addition to kitchens and WTW systems it is possible here to envisage smoking areas, production environments and hospitals. A plurality of extraction systems can be provided here in series and/or parallel. The filter system is preferably placed above the suction opening of the motor of for instance an extractor hood.

According to the present invention the filter comprises a carbon mat.

Providing a carbon mat achieves that excess ozone is captured. It is noted here that operation is possible at a relatively low voltage with the filter according to the invention such that ozone production is minimal. An additional advantage of combining an electric filter and carbon mat according to the invention is the increase in lifespan obtained for the carbon mat/filter as a result of
an electric field being applied. A self-cleaning action of the filter according to the invention is hereby obtained.

According to the present invention the filter comprises a plastic housing.

A safer system is realized by providing a plastic housing when compared to a metal housing due to the insulating character of the housing. In addition, the overall weight of the filter system according to the invention is also reduced. This makes it easier to handle the system and assemble it on site.

According to the present invention a conical body is provided in or close to the suction opening.

By providing a conical body the air drawn in using the fan is guided as optimally as possible through the electric filter. The surface area of the whole filter is hereby also utilized as fully as possible.

The conical body preferably provided with a shape such that a substantially uniform air distribution through the filter is realized during use. This further increases the effectiveness of the system.

The conical body is preferably provided with a number of ribs for better guiding of the airflow thereby. It has been found here that it is advantageous to provide the ribs in a spiral shape so as to thereby further improve the guiding of the airflow.

In a further advantageous preferred embodiment according to the present invention the filter system comprises a status indicator for the filter. Providing a status indicator enables a user to see whether the filter is switched on or switched off. The correct operation of the
filter, and thereby the filter system, can hereby be monitored.

According to the present invention the filter system comprises an ozone generator.

Providing an ozone generator effects an additional air cleaning. It has been found that in particular a combination of an electric filter, a carbon filter and an ozone generator achieves an effective cleaning due to the production of radical particles. These particles act on the cell walls and other parts of undesired particles in the indrawn air. The ozone generator is operatively connected to an ozone sensor which preferably operates with a short delay, for instance of 0.5 seconds.

A currently preferred system is preferably controlled on the basis of the measured airflow. Smoke, pollen, bacteria, moisture, odours, viruses, fungi and so on enter a pre-chamber along with the indrawn contaminated air. The conical body preferably guides the air to the filter parts. Formed in a second chamber are radical particles with which the cleaning reactions take place substantially in a third chamber between the electrodes, preferably at the position of a glass fibre mat, i.e. a glass fibre nano-mat, which holds the particles. Following the reactions, discharge preferably takes place via an active carbon mat with which excess ozone is also captured. The outer casing of the system is shaped such that a further sound reduction is thereby realized.

In a further advantageous preferred embodiment according to the present invention the filter system comprises a communication output or port for transmitting a signal to an external processor. This enables communication between the filter system according to the invention and an external processor. This relates for instance to a "filter on" signal so that an LED indication can for instance be externally controlled.

The invention further also relates to an extractor hood and/or kitchen provided with a filter system as described above.

Such an extractor hood and kitchen provide the same effects and advantages as described for the filter system.

The invention further also relates to a method for extracting air, comprising of:
- drawing in air through a suction opening using a fan;
- cleaning the indrawn air using a filter system comprising an electric filter as described above; and
- switching the filter using an airflow sensor and control means operatively connected thereto.

The method according to the invention provides the same advantages and effects as described for the filter system, the extractor hood and/or the kitchen provided therewith.

It has been found that a self-cleaning action of the filters is realized with the preferred combination of filters as described above. This preferably realized self-cleaning action has a positive effect on the lifespan of the system and/or the time interval between maintenance operations.

Further advantages, features and details of the invention are elucidated on the basis of a preferred embodiment thereof, wherein reference is made to the accompanying drawings, in which:
- Figure 1 shows a view of a filter of the filter system according to the invention;
- Figure 2 shows a view of a kitchen provided with an extractor hood with filter system of figure 1; and
- Figure 3 shows a view of an alternative filter system according to the invention.

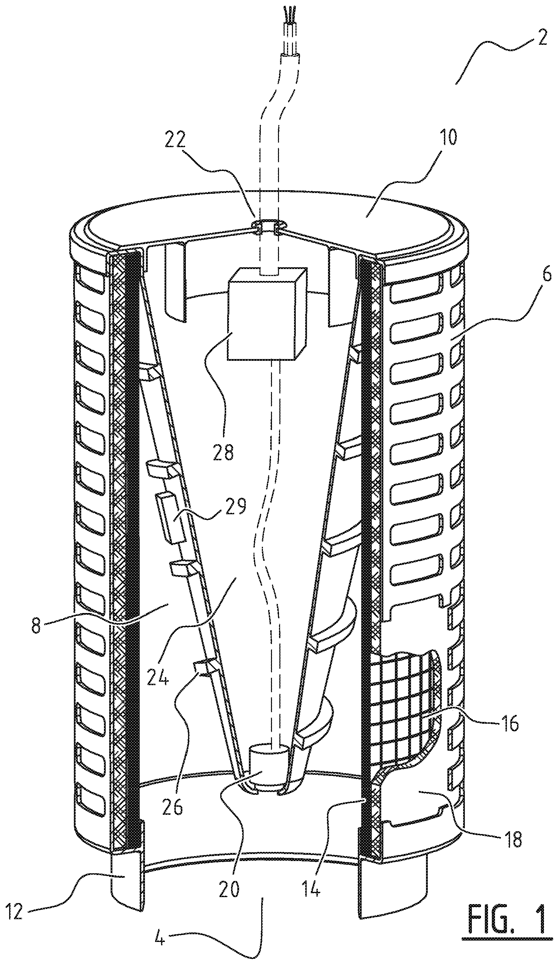

A filter system 2 (figure 1) has a suction opening 4. System 2 is further provided with a plastic outer casing 6 and an inner cone 8 for guiding the indrawn air. System 2 is further provided with a plastic cover 10 and connecting flange 12 which in the shown embodiment has a diameter of about 150 mm. In the shown embodiment system 2 is further provided with an inner pre-filter 14, an electrostatic grid 16 and an outer carbon filter 18.

In the shown embodiment grid 16 comprises a grid assembly with an inner and outer grid between which a glass fibre mat is arranged. Cover 10 is optionally provided with an open collector output, LEDs for status indication, and so on.

System 2 makes use of an airflow detector or sensor 20 which measures whether an airflow is present in system 2. Power supply to the electronics is provided via connection 22 which in the shown embodiment is a 12 V connection, preferably provided with an adapter for a 220 V or 110 V connection. Alternatively, the power supply is provided directly at 220 V. In the shown embodiment the conical body 8 is further provided with encapsulated electronics 24. The outer side of body 8 is provided with spiral-shaped ribs 26 for the purpose of improving the guiding of air. Also provided on the inner side in the shown embodiment is controller 28, which is connected to sensor 20 and activates or deactivates the electric filter.

In the shown embodiment system 2 is provided with a diameter of about 210 mm, with an inlet diameter of about 150 mm and a height of about 300 mm. An ozone generator 29 is also provided for an additional cleaning action.

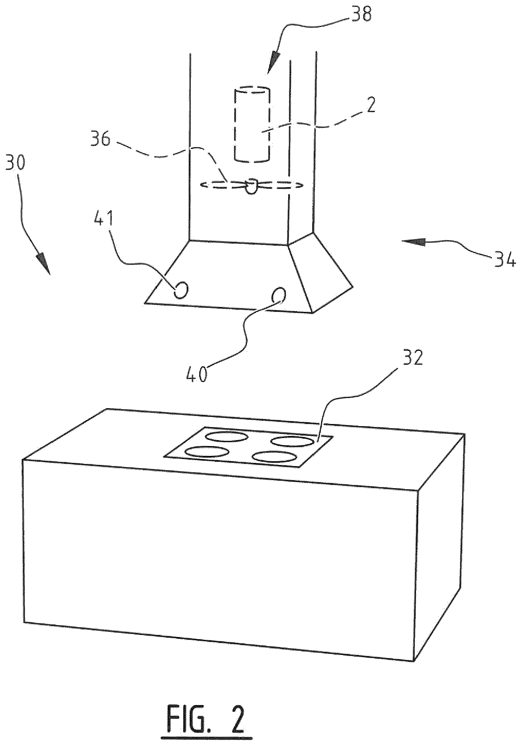

A kitchen 30 (figure 2) is provided with a cooking-range 32 and an extractor hood 34. Extractor hood 34 is provided with a fan 36 arranged in duct 38, in which filter system 2 is also arranged. In the shown embodiment filter 2 is placed above fan 36. This is particularly relevant if filter 2 has to be built into an existing system. Other configurations are also possible according to the invention.

Operation of extractor hood 34 takes place using control panel 40. In the shown embodiment an indicator 42 is also arranged in order to indicate whether filter system 2 is active or inactive.

When extractor hood 34 in kitchen 30 is activated, for instance with control 40, a fan 36 will draw in air via opening 4. In the shown embodiment sensor 20 arranged on conical body 8 will detect the presence of the airflow. This detection signal is transmitted to controller 28 which in the shown embodiment is incorporated into the encapsulated electronics space 24. Controller 28 then activates the electric filter, which is formed in the shown embodiment by the plastic outer casing 6, the inner pre-filter 14, the electrostatic grid 16 and the outer carbon filter 18. System 2 is hereby automatically activated using sensor 20 as soon as fan 36 becomes active. When fan 36 is deactivated, for instance using control 40 on extractor hood 34, the airflow will decrease and in most cases even come to a complete standstill. Sensor 20 therefore no longer measures a significant airflow and will switch off the filter via controller 28. Controller 28 will here also switch off indicator 41 at that moment.

In the shown embodiment of system 2 the voltage used preferably lies in the range of 0.05 Volt-10 kV, more
preferably in the range of 0.5-2 kV in normal ambient conditions. A voltage of 2-4 kV is employed for the optionally provided ozone generator 29.

In the shown embodiment a standby mode is provided which can if desired be continuously "active".

It will be apparent that combinations with other types of filter, such as an active carbon filter, are also possible. Filter system 2 can also be utilized in applications other than only in a kitchen 30.

Assembly of filter system 2 begins with a grating or mesh, i.e. grid 16, following which a second grating or mesh, i.e. grid 16, is provided at a short distance, for instance 40 mm, such that an inner and an outer annular cross-section are provided. The grids are connected. A glass fibre mat is preferably arranged in the intermediate space. Carbon mat 18 is arranged on the outer side of grid assembly 16. An ozone element 29 is subsequently arranged in a housing which is then placed on conical element 24. Conical element 24 can then be placed in the interior of grid assembly 16, wherein the wiring can be connected. An end plate 10 can be arranged following placing. In a currently preferred embodiment a printed circuit board is then adhered fixedly in system 2. The end plate with sensor can subsequently be arranged so that system 2 is mounted and can be applied.

System 2 has been tested in an experiment in a kitchen. Recirculation was started at about 200 m³/hour about 10 minutes prior to the cooking process in order to bring about a good circulation. In the applied situation the ozone binds the undesired particles with an efficiency of about 95%. The noise reduction realized was about 25% compared to the conventional extraction.

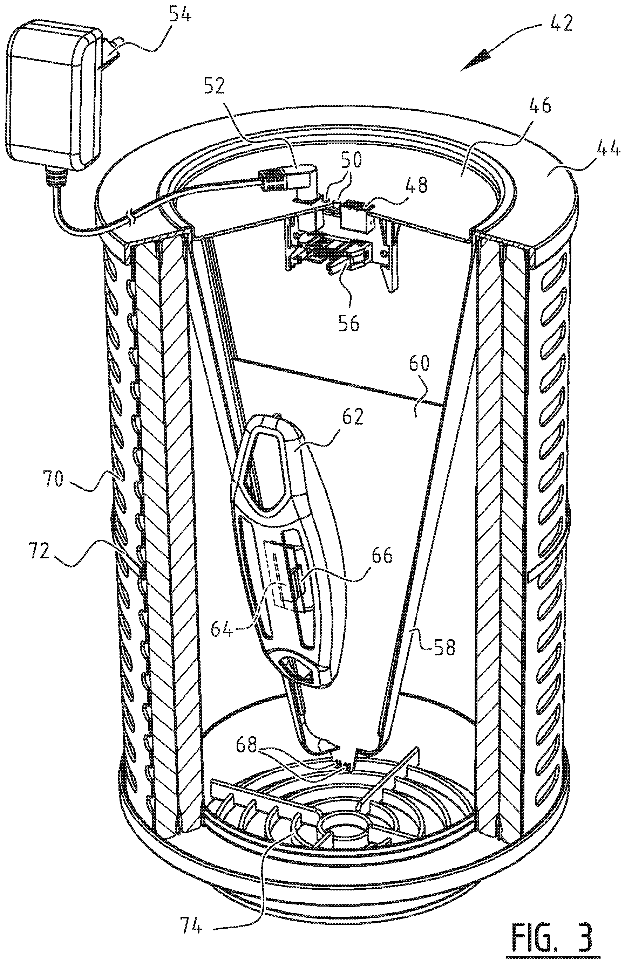

Filter 42 (figure 3) is provided with an annular holder 44 on which cover 46 rests. Cover 46 is provided with connector 48, buttons 50 and a connection 52 for plug/adapter 54 which is connected to connector 56. Cone 58 is provided with printed circuit board 60 which is operatively connected to connector 56. Arranged on cone 58 is plasma generator 62 provided with ozone plate 64 which is arranged with clamping part 66 on generator 62. Printed circuit board 60 is provided with sensors 68 on the side directed downward during use. Outer casing 70 is provided with bracket 72 for mounting on for instance an extractor hood. The filter inlet is provided with grate 74.

The present invention is by no means limited to the above described preferred embodiments thereof. The rights sought are defined by the following claims. The filter according to the invention complies with the required standards, including the Dutch NEN 7120. The filter is quickly mountable, also when applied in existing and conventional extractor hoods. In a currently preferred embodiment settings are preferably provided in adjustable and readjustable manner, preferably on a printed circuit board of the filter.

## Claims

1. Filter system (2) for an extractor hood, comprising:
- a plastic housing (6);
- a suction opening (4);
- a fan (36) operatively connected to the suction opening for drawing in air through the suction opening;
- an electric filter (16) for creating an electrostatic field;
- a sensor for measuring an indrawn airflow; and
- control means operatively connected to the sensor for switching the electric filter on the basis of the measured indrawn airflow;
- a plasma-filter; and
- a carbon mat (18) that is configured for capturing excess ozone, wherein a conical body (8) extends in the housing (6) and is provided in or close to the suction opening (4), and wherein the conical body has an apex near the opening (4) and a base near an opposite end of the housing (6).

2. Filter system as claimed in claim 1, further comprising a glass fibre mat between electrodes of the electric filter.

3. Filter system as claimed in one or more of the foregoing claims, wherein the conical body is provided with a number of ribs (26) for guiding the air flow.

4. Filter system as claimed in claim 3, wherein the ribs provide a spiral shape.

5. Filter system as claimed in one or more of the foregoing claims, further comprising a status indicator (42) for the filter.

6. Filter system as claimed in one or more of the foregoing claims, further comprising a communication output for transmitting a signal to an external processor.

7. Extractor hood (34) comprising a filter system (2) as claimed in one or more of the foregoing claims.

8. Kitchen (30) provided with a filter system (2) as claimed in one or more of the foregoing claims 1-6 and/or extractor hood (34) as claimed in claim 7.

9. Method for extracting air using a filter system (2) as claimed in one or more of the foregoing claims 1-6, by:
- drawing in air through the suction opening (4) using the fan (36);
- cleaning the indrawn air using the filter system; and
- switching the electric filter (16) using the airflow sensor (20) and control means (28) operatively connected thereto.

10. Method as claimed in claim 9, wherein the filter system has a self-cleaning action during use.

## Patentansprüche

1. Filtersystem (2) für eine Dunstabzugshaube, das aufweist:
- ein Kunststoffgehäuse (6);
- eine Absaugöffnung (4);
- ein Gebläse (36), das betriebsfähig mit der Absaugöffnung verbunden ist, um Luft durch die Absaugöffnung einzusaugen;
- ein elektrisches Filter (16) zum Erzeugen eines elektrostatischen Felds;
- einen Sensor zum Messen des eingesaugten Luftstroms; und
- eine Steuereinrichtung, die betriebsfähig mit dem Sensor verbunden ist, um das elektrische Filter auf der Basis des gemessenen eingesaugten Luftstroms zu schalten; und
- ein Plasmafilter; und
- eine Kohlenstoffmatte (18), die aufgebaut ist, um überschüssiges Ozon einzufangen,
wobei sich ein konischer Körper (8) in dem Gehäuse (6) erstreckt und in oder nahe der Absaugöffnung (4) bereitgestellt ist, und wobei der konische Körper eine Spitze in der Nähe der Öffnung (4) und eine Basis in der Nähe eines entgegengesetzten Endes des Gehäuses (6) hat.

2. Filtersystem nach Anspruch 1, das ferner eine Glasfasermatte zwischen Elektroden des elektrischen Filters aufweist.

3. Filtersystem nach einem oder mehreren der vorhergehenden Ansprüche, wobei der konische Körper mit einer Anzahl von Rippen (26) zum Leiten des Luftstroms versehen ist.

4. Filtersystem nach Anspruch 3, wobei die Rippen eine Spiralform bereitstellen.

5. Filtersystem nach einem oder mehreren der vorhergehenden Ansprüche, das ferner eine Statusanzeige (42) für das Filter aufweist.

6. Filtersystem nach einem oder mehreren der vorhergehenden Ansprüche, das ferner einen Kommunikationsausgang zum Übertragen eines Signals an einen externen Prozessor aufweist.

7. Dunstabzugshaube (34), die ein Filtersystem (2) nach einem oder mehreren der vorhergehenden Ansprüche aufweist.

8. Küche (30), die mit einem Filtersystem (2) nach einem oder mehreren der vorhergehenden Ansprüche 1-7 und/oder einer Dunstabzugshaube (34) nach Anspruch 8 versehen ist.

9. Verfahren zum Absaugen von Luft unter Verwendung eines Filtersystems (2) nach einem oder mehreren der vorhergehenden Ansprüche 1-8 durch:
- Einsaugen von Luft durch die Absaugöffnung (4) unter Verwendung des Gebläses (36);
- Reinigen der eingesaugten Luft unter Verwendung des Filtersystems; und
- Umschalten des elektrischen Filters (16) unter Verwendung des Luftstromsensors (20) und einer damit betriebsfähig verbundenen Steuereinrichtung (28).

10. Verfahren nach Anspruch 9, wobei das Filtersystem während der Verwendung eine Selbstreinigungstätigkeit hat.

## Revendications

1. Système de filtre (2) pour une hotte à évacuation, comprenant :
- un boîtier plastique (6) ;
- un orifice de succion (4) ;
- un ventilateur (36) raccordé de manière fonctionnelle à l'orifice de succion pour aspirer l'air à travers l'orifice de succion ;
- un filtre électrique (16) pour créer un champ électrostatique ;
- un capteur pour mesurer un écoulement d'air aspiré ; et
- un moyen de commande raccordé de manière fonctionnelle au capteur pour commuter le filtre électrique sur la base de l'écoulement d'air aspiré mesuré ;
- un filtre plasma ; et
- un mat de carbone (18) qui est configuré pour capturer un excédent d'ozone,
dans lequel un corps conique (8) s'étend dans le boîtier (6) et est prévu dans ou proche de l'orifice de succion (4), et dans lequel le corps conique a un apex près de l'orifice (4) et une base près d'une extrémité opposée du boîtier (6).

2. Système de filtre selon la revendication 1, comprenant en outre un mat de fibres de verre entre des électrodes du filtre électrique.

3. Système de filtre selon une ou plusieurs des revendications précédentes, dans lequel le corps conique est pourvu d'un certain nombre de nervures (26) pour guider l'écoulement d'air.

4. Système de filtre selon la revendication 3, dans lequel les nervures fournissent une forme de spirale.

5. Système de filtre selon une ou plusieurs des revendications précédentes, comprenant en outre un indicateur de statut (42) pour le filtre.

6. Système de filtre selon une ou plusieurs des revendications précédentes, comprenant en outre une sortie de communication pour transmettre un signal à un processeur externe.

7. Hotte à évacuation (34) comprenant un système de filtre (2) selon une ou plusieurs des revendications précédentes.

8. Cuisine (30) pourvue d'un système de filtre (2) selon une ou plusieurs des revendications précédentes 1 à 7 et/ou d'une hotte à évacuation (34) selon la revendication 8.

9. Procédé d'évacuation d'air en utilisant un système de filtre (2) selon une ou plusieurs des revendications précédentes 1 à 8, par :
- aspiration de l'air à travers l'orifice de succion (4) en utilisant le ventilateur (36) ;
- nettoyage de l'air aspiré en utilisant le système de filtre ; et
- commutation du filtre électrique (16) en utilisant le capteur d'écoulement d'air (20) et un moyen de commande (28) raccordé à celui-ci de manière fonctionnelle.

10. Procédé selon la revendication 9, dans lequel le système de filtre a une action autonettoyante pendant l'utilisation.
